# EUROPÄISCHE PATENTSCHRIFT

(11) **EP 1 344 448 B1**
(45) Veröffentlichungstag und Bekanntmachung des Hinweises auf die Patenterteilung: **22.07.2009**
(21) Anmeldenummer: 03003031.6
(22) Anmeldetag: 12.02.2003
(51) Int. Cl.: A01F 15/07

(54) **Rundballenpresse**
Rotobaler
Presse à balles rondes

(30) Priorität: 15.03.2002 DE 10211412
(43) Veröffentlichungstag der Anmeldung: 17.09.2003
(73) Patentinhaber: DEERE & COMPANY, Moline, Illinois 61265-8098 (US)
(72) Erfinder: Viaud, Jean, 70100 Gray (FR)
(74) Vertreter: Magin, Ludwig Bernhard

(56) Entgegenhaltungen:
- EP-A- 1 142 469
- EP-A- 1 157 603
- US-A- 5 568 716
- US-A- 6 006 504
- US-A- 6 029 420
- US-B1- 6 272 816

## Beschreibung

Die Erfindung betrifft eine Rundballenpresse mit einem Pressraum, wenigstens einem den Pressraum umfangsseitig umgebenden Pressmittel, einer Hüllvorrichtung und einer Hüllmitteleinlassöffnung in der Umfassung des Pressraums durch das Pressmittel oberhalb des Bodens des Pressraums.

Aus der US-A-5,581,973 ist eine Rundballenpresse bekannt, in deren vorderen Bereich eine Hüllvorrichtung vorgesehen ist, mit der z. B. ein von einer Rolle abgezogenes Netz zwischen einer Pressrolle und einer Umlenkrolle in einen Ballenpressraum mittels einer Zuführvorrichtung eingeführt werden kann. Die Zuführvorrichtung enthält einen motorisch verstellbaren Schnabel, in dem das Hüllmittel eingeklemmt ist und an dessen Vorderseite ein Reststück hängt, das in Eingriff mit dem in dem Ballenpressraum gebildeten und sich drehenden Ballen gebracht werden kann. Die Zuführvorrichtung stellt einen beachtlichten baulichen Aufwand dar.

Die DE-A-34 18 681 zeigt ebenfalls eine Rundballenpresse mit einer an der Vorderseite angebrachten Hüllvorrichtung, bei der eine Hüllmittelrolle im vorderen oberen Eckbereich untergebracht ist und sich zwischen zwei Pressrollen zwei Zuführrollen befinden, die das Hüllmittel zwischen sich hindurch ziehen und dem Ballenpressraum zuführen. Zwischen der Hüllmittelrolle und den Zuführrollen erstreckt sich ein stark geneigtes Leitblech. Auch diese Zuführrollen führen zu einem erhöhten Bauaufwand.

Gemäß der WO-A-97/05767 wird eine Hüllmittelrolle vertikal bewegt, um in Anlage an den sich drehenden Ballen zu gelangen, der dann das ebenfalls auf einem Leitblech zugeführte Hüllmittel erfasst und mitnimmt. Das Hüllmittel wird zusammen mit dem Pressgut durch einen Spalt am Boden des Ballenpressraums zugeführt und auf diese Weise zwischen zwei Lagen Pressgut eingefügt, was allerdings die Haltekraft benachbarter Netzlagen reduziert.

Nach der EP-A-941 651 ruht eine Hüllmittelrolle auf einer oberen von zwei Zuführrollen und wird von dieser während des Hüllvorgangs in Drehung versetzt und gegenüber dem sich drehenden Ballen abgebremst. Das Hüllmittel wird zwischen beiden Zuführrollen hindurch gezogen und einer Mitnahmevorrichtung aufgegeben, die es einer am Boden des Ballenpressraums vorgesehenen Einlassöffnung für das Erntegut zuführt. Die Zuführrollen und die Mitnahmevorrichtung stellen einen erheblichen Bauaufwand dar.

Das der Erfindung zugrunde liegende Problem wird darin gesehen, eine Hüllvorrichtung vorzuschlagen, die mit wenig Bauaufwand und Bauraum eine zuverlässige Zufuhr von Hüllmittel bewirkt.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise bedarf es keiner zusätzlichen Förder- oder Zuführvorrichtung für das Hüllmittel; es fällt vielmehr aufgrund der Schwerkraft in den zumindest teilweise darunter liegenden Pressraum. Es sind auch keine zwei Zuführrollen erforderlich, weil das Hüllmittel so an der einen zuführenden Rolle anliegt, dass es bereits aufgrund dieses Kontakts mitgenommen wird. Die Hüllvorrichtung kann sowohl an der Vorder- als auch an der Rückseite der Rundballenpresse angeordnet sein, was von der Drehrichtung des Ballens bzw. des Pressmittels abhängt. Das Pressmittel kann aus einem einzigen breiten Band, aus einer Vielzahl und gegebenenfalls in mehreren Sätzen zusammengefassten Riemen, aus einem Stabkettenförderer oder aus einer Kombination von diesen gebildet werden. Die enge Folge der Hüllmitteleinlassoffnung, der Rolle und der Hüllmittelrolle führt zu einer gedrungenen Bauweise.

Die Bauweise kann mit noch geringerem Bauaufwand und Bauraum ausgeführt werden, wenn die Rolle zum Fördern des Hüllmittels gleichzeitig Teil des Pressmittels ist. Zum Beispiel zieht/-en eine Pressrolle oder ein oder mehrere Riemen das Hüllmittel in den Pressraum. Bei dieser Ausführung wird die Spannung des Hüllmittels auf dem Ballen durch eine separate Bremse aufgebracht, die z. B. auf die Hüllmittelrolle wirkt und gegebenenfalls gesteuert wird, so dass das Hüllmittel beim Wickelbeginn leicht von dem Ballen erfasst und mitgenommen werden kann. Die Verstellbarkeit des Trägers macht es möglich, das Hüllmittel erst dann in Eingriff mit dem ansonsten stets drehenden Pressmittel zu bringen, wenn auch wirklich ein Wickelvorgang erfolgen soll.

Alternativ ist die Rolle von dem Pressmittel getrennt, bleibt stets in ihrer Lage und wird nur zum Wickelbetrieb betrieben. Zwar wäre es möglich, die Rolle z. B. mit einem Elektro- oder Hydraulikmotor anzutreiben; da das oder die Pressmittel aber ohnehin während des Umhüllungsbetriebs angetrieben wird/werden, findet eine Bauvereinfachung dann statt, wenn der Antrieb der Rolle von dem Pressmittel abgenommen wird. Der abgeleitete Antrieb wird dann vorzugsweise untersetzt, so dass zum Erhalt der Spannung in dem Hüllmittel der Ballen schneller dreht als das Hüllmittel zugeführt wird.

Es ist zwar möglich, die Hüllmittelrolle in bekannter Weise mit einer auf den Rollenkern wirkenden Bremse abzubremsen. Technisch einfacher ist es jedoch, die Hüllmittelrolle mit ihrem Gewicht auf dem Träger, einer Wandung oder dergleichen ruhen oder anlegen zu lassen. Der Träger und/oder die Wandung können mit einem reibungssteigernden Belag oder Profil versehen werden, um die Bremskraft zu erhöhen.

Zwar gelangt das Hüllmittel aufgrund seines eigenen Gewichts direkt in den Pressraum; die Bewegungsenergie der Rolle könnte jedoch anfänglich das Hüllmittel in eine ungewollte Bahn bringen. Mit einem Leitblech - gerade oder gebogen - wird das Hüllmittel direkt und sicher in die Hüllmitteleinlassöffnung geführt. Anstatt eines Blechs kann auch Kunststoff, Holz oder dergleichen verwendet werden.

Wenn auch verschiedentlich vorgeschlagen wurde, Hüllmittel in vorgefertigter Länge bereitzustellen, so ist es doch wesentlich effektiver, Hüllmittel für eine Vielzahl von Ballen von einer Hüllmittelrolle abzuziehen und je nach Bedarf mittels einer entsprechenden Vorrichtung abzutrennen. Eine solche Trennvorrichtung ist besonders bei Rundballenpressen mit einem variablen Pressraum von Vorteil, weil dort der Hüllmittelbedarf mit der Größe des Ballens variiert.

Eine unter Kraftbeaufschlagung stehende Druckrolle, die im Wesentlichen diametral gegenüber der Rolle an der Hüllmittelrolle angreift, bewirkt zum einen einen bestimmten Spannungsaufbau in dem Hüllmittel und zum anderen eine dauerhafte Anlage der Hüllmittelrolle an der Rolle, und zwar auch beim rauhen Betrieb auf dem Feld.

Jedenfalls dann, wenn die Rolle zu ungefähr der Hälfte ihres Umfangs von dem Hüllmittel umschlossen wird, ist unter normalen Umständen der Kraftschluss zwischen beiden ausreichend groß, um für eine Förderung einerseits und eine Spannung andererseits zu sorgen.

Eine Abdeckung hat den Vorteil, dass die Hüllvorrichtung von Umwelteinflüssen möglichst verschont wird. Wenn zudem die Druckrolle bzw. eine Andrückvorrichtung an der Abdeckung angebracht und mit dieser verstellbar sind, kann beim Anheben oder Wegschwenken der Abdeckung zugleich der Weg für den Austausch einer Hüllmittelrolle frei gemacht werden.

Eine stabile Lagerung der Hüllmittelrolle ist dadurch leicht zu erreichen, dass eine Andrückvorrichtung vorgesehen wird, die einerseits auf die an der Hüllmittelrolle anliegende Druckrolle wirkt und sich andererseits an der Abdeckung abstützt. Die Beaufschlagung, d. h. die Anlagekraft, kann durch die Bemessung des Kraftangriffs an dem Kraftglied eingestellt werden. Beispielsweise kann das Kraftglied von einem Gasspeicher, einer Druck- oder Zugfeder oder dergleichen beaufschlagt werden.

Wenn das Kraftglied eine Totpunktstellung überschreitet, kann es einerseits davon die Abdeckung in die geschlossene und die Druckrolle in die anliegende und andererseits davon beide in die geöffnete, bzw. die abgehobene Stellung bringen, wobei die Stellung durch die in dem Kraftglied gespeicherte Kraft eingenommen wird.

Wenn die Hüllvorrichtung breiter ausgebildet ist als der Pressraum und stromabwärts der Rolle Leitbleche oder Schlitze vorgesehen sind, um das Hüllmittel zu den Stirnseiten eines in dem Pressraum gebildeten Ballens gegebenenfalls mittels einer Spreizvorrichtung zu leiten, wird der Ballen nicht nur an seiner Umfangsfläche bedeckt, sondern auch über die Ecken und teilweise auf der Stirnfläche. Bei einem aus Silage gebildeten Ballen wird unter anderem dadurch der Lufteinschluss verringert, wodurch sich die Futterqualität erhöht.

Die Verwendung eines Ablenkteils schafft einen Freiraum zwischen dem Ballen und der Seitenwand, in den der Bereich des Hüllmittels schlüpfen kann, der sich später auf die Stirnflächen auflegen soll. Dieser Ablenkteil kann eine einfache Platte, eine Formgebung der Seitenwand oder dergleichen sein, die sich wenigstens um die Stärke des Hüllmittels radial von der Seitenwand nach innen erstreckt.

Der Vorteil eines von der Seitenwand beabstandeten Ablenkteils liegt darin, dass das Hüllmittel bereits vor dem Eintritt in den Pressraum umgelegt werden kann und problemlos von dem Ballen mitgenommen werden kann.

In der Zeichnung sind mehrere nachfolgend näher beschriebene Ausführungsbeispiele der Erfindung dargestellt. Es zeigt:
- Fig. 1: eine Rundballenpresse in Seitenansicht mit einer Hüllvorrichtung nach einem ersten Ausführungsbeispiel in einer Betriebsstellung und in schematischer Darstellung,
- Fig. 2: die Hüllvorrichtung nach Figur 1 in vergrößerter Darstellung mit einer Trennvorrichtung und in einem Beschickungszustand,
- Fig. 3: eine Hüllvorrichtung nach einem zweiten Ausführungsbeispiel mit einem Leitblech und geänderter Trennvorrichtung,
- Fig. 4: eine Hüllvorrichtung nach einem dritten Ausführungsbeispiel mit einer Leitrolle und der geänderten Trennvorrichtung nach Figur 3,
- Fig. 5: eine Hüllvorrichtung nach einem vierten Ausführungsbeispiel mit einer Lagermöglichkeit für zwei Hüllmittelrollen in leicht geneigter Anordnung,
- Fig. 6: eine Hüllvorrichtung nach einem fünften Ausführungsbeispiel mit einer Lagermöglichkeit für zwei Hüllmittelrollen in im Wesentlichen waagrechter Anordnung,
- Fig. 7: eine Hüllvorrichtung nach einem sechsten Ausführungsbeispiel mit einer Lagermöglichkeit für zwei Hüllmittelrollen in im Wesentlichen aufrechter Anordnung,
- Fig. 8: die Hüllvorrichtung nach Figur 1 für ein Hüllmittel, das breiter ist als ein in der Rundballenpresse erzeugter Rundballen mit einer Leitvorrichtung, in Vorderansicht,
- Fig. 9: die Hüllvorrichtung nach Figur 8 in Seitenansicht,
- Fig. 10: die Hüllvorrichtung nach Figur 1 für ein Hüllmittel, das breiter ist als ein in der Rundballenpresse erzeugter Ballen mit einem Schlitz, in Vorderansicht,
- Fig. 11 ,: die Hüllvorrichtung nach Figur 10 in Seitenansicht
- Fig. 12: die Hüllvorrichtung nach Figur 1 für ein Hüllmittel, das breiter ist als ein in der Rundballenpresse erzeugter Ballen mit einem Ablenkteil, in Seitenansicht,
- Fig. 12a: einen Querschnitt durch die Seitenwand im Bereich des Ablenkteils nach Figur 12 in Draufsicht,
- Fig. 13: die Hüllvorrichtung nach Figur 1 für ein Hüllmittel, das breiter ist als ein in der Rundballenpresse erzeugter Ballen mit einem Einlasskanal, in Seitenansicht, und
- Fig. 13a: einen Querschnitt durch die Seitenwand im Bereich des Einlasskanals nach Figur 13 in Draufsicht.

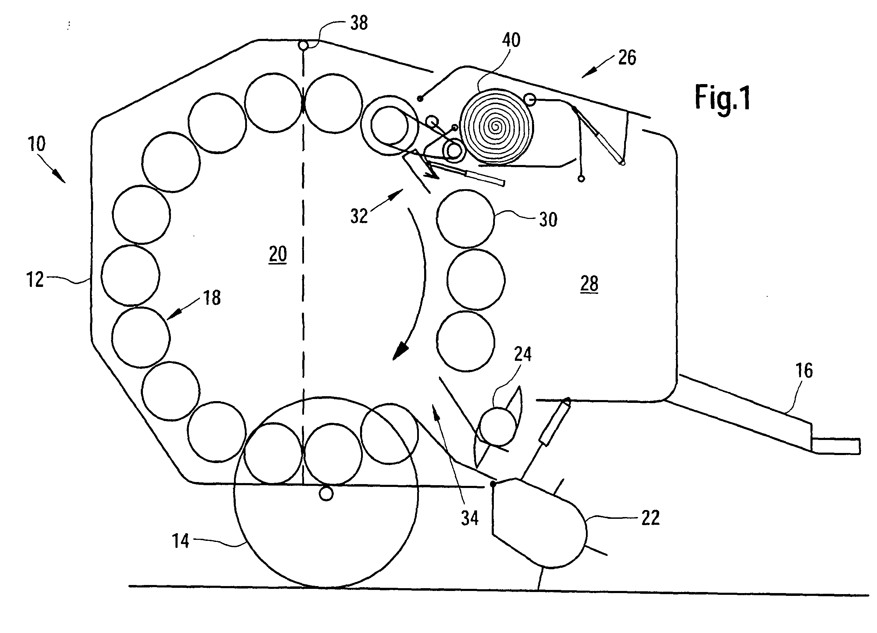

Eine in Figur 1 schematisch dargestellte Rundballenpresse 10 enthält unter anderem ein Fahrgestell 12, Räder 14, eine Deichsel 16, Pressmittel 18, einen Pressraum 20, eine Aufnahmevorrichtung 22, einen Förderer 24 und eine Hüllvorrichtung 26.

Die Rundballenpresse 10 dient der Aufnahme und dem Pressen von auf dem Boden liegendem Erntegut zu einem Ballen, nämlich einem Rundballen, wie dies an sich bekannt ist. Allerdings könnte sie auch zum Pressen von Wirtschaftsgütern wie Stoffe, Müll, Folien etc. verwendet werden.

Das Fahrgestell 12 wird von einem nicht gezeigten Schraubund/oder Schweißzusammenbau gebildet, an dessen Unterseite sich eine nicht dargestellte Achse zur Aufnahme der Räder 14 befindet, das vorne mit der Deichsel 16 verbunden ist und seitlich Seitenwände 28 trägt.

Die Räder 14 dienen der Abstützung der Rundballenpresse 10 auf dem Boden und der Fortbewegung über insbesondere ein Feld, auf dem das Pressgut abgelegt ist.

Mit der Deichsel 16 kann die Rundballenpresse 10 an ein nicht gezeigtes Zugfahrzeug, z. B. an einen Ackerschlepper, angehängt werden.

Der Begriff Pressmittel 18 wird im Folgenden als Oberbegriff für alle denkbaren Ausführungen in Einzahl oder Vielzahl verwendet. Das Pressmittel 18 ist in diesem Ausführungsbeispiel als eine Vielzahl von Pressrollen 30 ausgebildet, deren Drehachsen zueinander parallel verlaufen und auf einem Kreisbogen gelegen sind. Mit der Ausnahme einer Hüllmitteleinlassöffnung 32 und einer Ernteguteinlassöffnung 34 umschließen die Pressrollen 30 den Pressraum 20 umfangsseitig im Wesentlichen vollständig. Mit Bezug auf den Uhrzeigerdrehsinn und mit Blick auf Figur 1 befindet sich die Hüllmitteleinlassöffnung 32 ungefähr in einer 1:30 Uhr Stellung und die Ernteguteinlassöffnung 34 in einer 4:30 Stellung. In der Umfangsrichtung gesehen entspricht die Breite der Hüllmitteleinlassöffnung 32 ungefähr dem Durchmesser einer Pressrolle 30 und die der Ernteguteinlassöffnung 34 ungefähr dem von eineinhalb Pressrollen 30. Die Lage der Hüllmitteleinlassöffnung 32 kann variiert werden, solange sie oberhalb des Bodens des Pressraums 20 gelegen ist und die ihr benachbarte nächsttiefere Pressrolle 30 in dem Pressraum nach unten dreht. Anstelle dieses Pressmittels 18, das vorwiegend für einen Pressraum 20 mit einem konstanten Volumen geeignet ist, könnte auch ein Pressmittel 18 vorgesehen sein, das nachgiebige Elemente wie schwenkbare Pressrollen, Riemen, Ketten und dergleichen aufweist, mit denen die Größe des Pressraums 20 variabel gestaltet werden kann, wie dies ebenfalls bekannt ist. Das Erfordernis der Hüllmitteleinlassöffnung 32 und der Ernteguteinlassöffnung 34 bleibt hiervon unberührt. Das Pressmittel 18 wird auf nicht gezeigte Weise, z. B. mittels Gelenkwelle, Getriebe und Ketten in Drehung versetzt, so dass unter anderem eine oberhalb der Hüllmitteleinlassöffnung 32 vorgesehene Pressrolle 30 während des Betriebs dreht und ein Abtriebsrad 36 aufweist. Allerdings könnte dieses Abtriebsrad 36 auch auf einer anderen antreibbaren Komponente der Rundballenpresse 10 vorgesehen sein. Der Antrieb des Pressmittels 18 erfolgt bei diesem Ausführungsbeispiel derart, dass ein Ballen 112 in dem Pressraum 20 gemäß dem dort wiedergegebenen Pfeil dreht.

Der Pressraum 20 kann von fester oder variabler Größe sein und dient der Aufnahme des Pressguts und dessen Verdichtung. In herkömmlicher Weise ist der Pressraum 20 in vertikaler Richtung in eine vordere und eine rückwärtige Hälfte unterteilt, die in einem oberen Lager 38 miteinander verbunden sind, so dass die rückwärtige Hälfte zum Auswerfen des Ballens 112 angehoben werden kann.

Die Aufnahmevorrichtung 22 nimmt auf dem Boden in einem Schwad abgelegtes Erntegut auf und führt es gegebenenfalls mit Hilfe des Förderers 24 durch den Ernteguteinlass 34 in den Pressraum 20.

Der Förderer 24, der auch als eine Schneidvorrichtung ausgebildet sein kann und nur wahlweise vorhanden ist, nimmt das Pressgut von der Aufnahmevorrichtung 22 an, zerkleinert es gegebenenfalls und fördert es in den Pressraum 20.

Die Hüllvorrichtung 26 ist ihrer Art nach bekannt und dient dazu, nach dem Fertigstellen eines Ballens 112 Hüllmittel 40 in den Pressraum 20 einzuführen, wo es von der Umfangsfläche des sich drehenden Ballens 112 erfasst und mitgenommen wird, bis es den Ballen 112 umschlossen und somit gebunden hat. Die Hüllvorrichtung 26 enthält demgemäß einen Träger 42, gegebenenfalls eine eigenständige Zuführvorrichtung 44, eine Trennvorrichtung 46, eine Andrückvorrichtung 48 und möglicherweise eine Abdeckung 50.

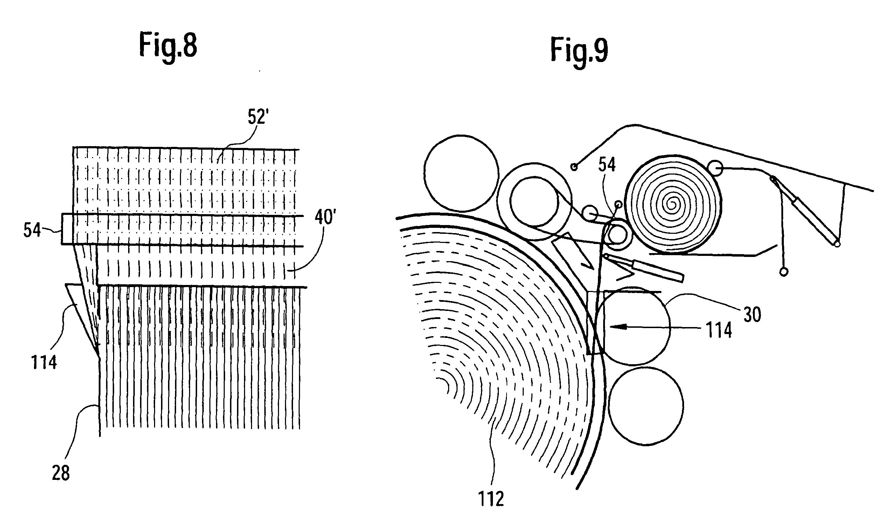

Das Hüllmittel 40 ist meist als ein Netz ausgebildet, kann aber auch eine Folie sein und ist meist, wie auch in dem vorliegenden Ausführungsbeispiel, für eine Vielzahl von Ballen 112 auf einer Hüllmittelrolle 52 aufgerollt. In den Ausführungsbeispielen nach den Figuren 1 bis 7 ist das Hüllmittel 40 ungefähr so breit wie ein in dem Pressraum 20 gebildeter Ballen 112; in den Ausführungsbeispielen nach den Figuren 8 bis 11 ist das Hüllmittel 40 breiter als der Ballen 112 und kann somit außer dessen Umfangsseite auch einen Teile dessen Stirnseite bedecken. Insbesondere ein als Netz ausgebildetes Hüllmittel 40 wird beim Kontakt mit einem sich drehenden Ballen 112 von den vorstehenden Erntegutstängeln erfasst, in dem Bereich zwischen der Ballenumfangsfläche und der Innenseite der Pressrollen 30 eingeklemmt und schließlich um den Ballen 112 geschlungen.

Der Träger 42 ist in den Ausführungsbeispielen nach den Figuren 1 bis 4 und 8 bis 11 als eine ebene und im Wesentlichen waagrechte, meist metallische Platte ausgebildet, die pressraumseitig bis nahe an die Zuführvorrichtung 44 reicht und auf der dem Pressraum 20 abgelegenen Seite in einer Aufbiegung ausläuft, die der Lagesicherung der Hüllmittelrolle 52 dient. Es wäre auch möglich, den Kern der Hüllmittelrolle 52 auf einer Achse oder Welle aufzunehmen und diese in einer Führung drehbar und verschiebbar zu lagern. Normalerweise erstreckt sich der Träger 42 über die gesamte Breite des Pressraums 20.

Die Zuführvorrichtung 44 enthält in diesem Fall eine Rolle 54 von gegenüber einer Pressrolle 30 geringerem Durchmesser in oder an der Hüllmitteleinlassöffnung 32. Während in der Zeichnung eine separate Rolle 54 gezeigt ist, wäre es auch möglich, die auf die Hüllmitteleinlassöffnung 32 nach unten folgende Pressrolle 30 als Rolle 54 zu verwenden, sofern eine Bremsvorrichtung für das Hüllmittel 40 vorhanden ist. Die Rolle 54 ist mit einem Antriebsrad 56 versehen, das mit dem Abtriebsrad 36 fluchtet und mit diesem über ein Zugmittel 58 antreibbar verbunden ist. Die Umfangsgeschwindigkeit der Rolle 54 ist geringer als die des Ballens 112, so dass das Hüllmittel 40 unter Spannung auf die Umfangsfläche des Ballens 112 aufgelegt wird. Das Zugmittel 58 ist vorzugsweise ein Riemen, der mittels einer Spannrolle 60 in ausreichenden Kraftschluss mit dem Ab- und dem Antriebsrad 36 und 56 bringbar ist. Die Rolle 54 ist mit einem griffigen Belag oder Profil versehen, der sicherstellt, dass das Hüllmittel 40 sicher zu der Hüllmitteleinlassöffnung 32 befördert wird.

Die Trennvorrichtung 46 enthält einen Amboss 62, ein Scherglied 64 und eine Betätigungsvorrichtung 66 und dient dazu, das Hüllmittel 40 nach dem Hüllvorgang in einen auf dem Ballen 112 befindlichen und einen auf der Hüllmittelrolle 52 befindlichen Abschnitt zu unterteilen.

Der Amboss 62 erstreckt sich über die gesamte Breite des Hüllmittels 40 und ist starr zwischen den Seitenwänden 28 gehalten. Er bietet eine glatte, scharfe Kante 68, an der das Hüllmittel 40 während des Trennvorgangs festgeklemmt wird und gegebenenfalls zum Abriss gebracht wird. Zudem ist an den Amboss 62 eine Platte 126 angebracht, die die Trennvorrichtung 46 zu dem Pressraum 20 hin abschließt, indem sie den Spalt zwischen beiden benachbarten Pressrollen 30 im Wesentlichen überbrückt.

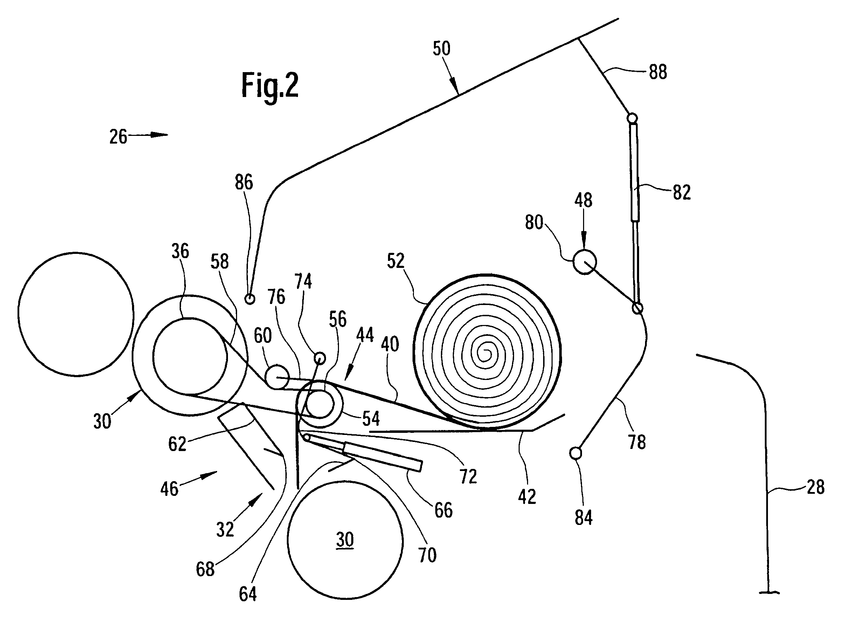

Das Scherglied 64 enthält eine Scherleiste 70, die vorzugsweise endseitig von jeweils einem Arm 72 getragen wird und mittels der Betätigungsvorrichtung 66 um ein Lager 74 geschwenkt werden kann. Die Scherleiste 70 wird für den Trennvorgang an dem Amboss 62 zur Anlage gebracht, so dass das gespannte Hüllmittel 40 an dessen Kante abreißt und der mit der Hüllmittelrolle 52 verbundene Abschnitt gehalten wird. Der dem Zugmittel 58 zugelegene Arm 72 ist mit einem Halter 76 für die Spannrolle 60 versehen, was bewirkt, dass abhängig von der Stellung der Scherleiste 70 die Rolle 54 angetrieben wird oder nicht. Während in einer Trennstellung die Scherleiste 40 an dem Amboss 62 anliegt und dem Hüllmittel 40 den Weg versperrt (sh. Figur 1), wird in einer Zuführ- oder Beschickungsstellung (sh. Figur 2) eine Durchtrittsöffnung zwischen ihr und dem Amboss 62 gebildet, durch diese Hüllmitteleinlassöffnung 32 kann das lose Hüllmittel 40 aufgrund der Schwerkraft und der drehenden Rolle 54 zu dem Pressraum 20 gelangen.

Die Betätigungsvorrichtung 66 kann beliebig ausgebildet sein, z. B. mechanisch, elektrisch, hydraulisch oder pneumatisch und hat die Aufgabe, die Scherleiste 70 und mit ihr auch die Spannrolle 60 in eine Zuführ- oder eine Trennstellung zu bringen. Die Steuerung kann manuell oder automatisch und in Abhängigkeit von der Pressgutzufuhr erfolgen.

Die Andrückvorrichtung 48 enthält einen Schwenkteil 78, eine Druckrolle 80 und ein Kraftglied 82, die sich gemäß den Figuren 1 bis 4 und 8 bis 11 sämtlich auf der dem Pressraum 20 abgelegenen Seite des Trägers 42 befinden, was jedoch nicht zwingend ist. Die Andrückvorrichtung 48 hat die Aufgabe, das Hüllmittel 40 bzw. die Hüllmittelrolle 52 derart in Reibkontakt, d. h. in Kraftschluss, mit der Rolle 54 zu bringen und während des Betriebs zu halten, dass die Rolle 54 einerseits das Hüllmittel 40 sicher befördert und andererseits die erforderliche Bremskraft aufbringt.

Der Schwenkteil 78 ist einenends in einem Lager 84 mit einer horizontalen Lagerachse vertikal schwenkbar aufgenommen, das sich geringfügig und nicht notwendigerweise unterhalb des Trägers 42 in der Nähe der Aufbiegung befindet. Der Schwenkteil 78 kann sowohl als eine gebogenen Platte als auch als ein oder mehrere Schwenkarme ausgebildet werden und hat bei den Ausführungsbeispielen nach Figur 1 bis 4 und 8 bis 11 die Form eines Winkelhebels.

Die Druckrolle 80 wird an dem Schwenkteil 78 anderenends drehbar oder fest aufgenommen. Der Schwenkteil 78 und die Anbringung der Druckrolle 80 sind dabei so gewählt, dass die Druckrolle 80 in jeder Stellung des Schwenkteils 78 auf der Umfangsfläche der Hüllmittelrolle 52 im Wesentlichen diametral gegenüber der Rolle 54 anliegt.

Das auch als Druckglied oder Spannglied bezeichenbare Kraftglied 82 greift einenends gelenkig zwischen dem Lager 84 und der Druckrolle 80 an dem Schwenkteil 78 und anderenends gelenkig direkt an dem Fahrgestell 12 oder in diesem Ausführungsbeispiel an der mit diesem verbundenen Abdeckung 50 an. Das Kraftglied 82 kann als eine mechanische Feder, ein Gasdruckspeicher oder dergleichen ausgebildet sein, um die Anlagekraft der Druckrolle 80 auf der Umfangsfläche der Hüllmittelrolle 52 sicherzustellen. Das Kraftglied 82 ist so ausgebildet, dass es gegen die Wirkung einer Kraft verkürzbar ist.

Die Abdeckung 50 ist z. B. als eine Blechhaube ausgebildet und in einem Lager 86 nahe der oberhalb der Hüllmitteleinlassöffnung 32 gelegenen Pressrolle 30 vertikal schwenkbar gelagert. Die Abdeckung 50 ist so groß, dass sie den Träger 42, die Zuführvorrichtung 44, die Trennvorrichtung 46 und die Andrückvorrichtung 48 bedeckt und gegen Verschmutzung und Wettereinflüsse schützt. An dem dem Lager 86 abgelegenen Endbereich steht von der Unterseite der Abdeckung ein Arm 88 ab, der an seinem freien Endbereich 90 gelenkig mit dem Kraftglied 82 verbunden ist. In einer in Figur 1 gezeigten schließenden Stellung der Abdeckung 50 befindet sich das Lager 84 unterhalb und die Druckrolle 80 oberhalb einer das Lager 86 mit dem freien Endbereich 90 verbindenden Geraden, so dass sowohl die Abdeckung 50 stets nach unten als auch die Druckrolle auf die Hüllmittelrolle 52 gedrückt wird, da das Kraftglied 82 bestrebt ist, sich auszudehnen, was jedoch nach dem Überschreiten einer Totpunktlage nicht mehr möglich ist.

Die Hüllmittelrolle 52 nimmt mehrere hundert Meter Hüllmittel 40 auf sich auf und nimmt im Durchmesser während des Betriebs ständig ab. Die Ausbildung des Trägers 42, sowie die Anlage der Druckrolle 80 unter dem Druck des Kraftglieds 82 bewirkt, dass die Hüllmittelrolle 52 stets an der Rolle 54 anliegt. Aufgrund der Lage der Hüllmittelrolle 52 mit Bezug auf die Rolle 54 ist regelmäßig gewährleistet, dass das Hüllmittel 40 zu ca. 180 Grad die Rolle 54 umschlingt. Dieser Umschlingungswinkel kann durch die entsprechende Auswahl von Profil oder Belag verringert oder vergrößert werden.

Nach alledem ergibt sich folgende Funktion der Hüllvorrichtung 26.

Zur Aufnahme des Betriebs wird die Abdeckung 50 in die in Figur 2 gezeigte Stellung gebracht, d. h. angehoben, so dass sich die Druckrolle 80 von der Zuführvorrichtung 44 wegbewegt und eventuell von der Hüllmittelrolle 52 oder deren Kern abhebt. Die Trennvorrichtung 46 ist betätigt, so dass kein freier Durchtritt durch die Hüllmitteleinlassöffnung 32 besteht. Anschließend wird eine bewickelte Hüllmittelrolle 52 auf den Träger 42 von der Seite oder von vorne gelegt, ein Endbereich des Hüllmittels 40 von ihr abgezogen, über die Rolle 54 gelegt und ungefähr bis zum Auftreffen auf die Scherleiste 70 gezogen. Die Lage der Hüllmittelrolle 52 ist dabei so gewählt, dass das Hüllmittel 40 von der unteren und mit dem Träger 42 in Reibverbindung stehenden Seite der Hüllmittelrolle 52 abgezogen wird. Dann wird die Hüllmittelrolle 52 an die Rolle 54 herangerollt und die Abdeckung 50 abgesenkt, so dass sich die Druckrolle 80 an die Umfangsfläche der Hüllmittelrolle 52 anlegt und sie an die Rolle 54 andrückt. Während der Abwärtsbewegung der Abdeckung 50 wird das Kraftglied 82 eine Totpunktlage überschreiten und anschließend eine Stellung einnehmen, in der es die Abdeckung 50 zu dem Träger 42 hin drängt und somit stets geschlossen hält, da es sich anderenends an der Hüllmittelrolle 52 abstützt. Während des Pressbetriebs wird die Spannrolle 60 nicht auf das Zugmittel 58 gedrückt und somit die Zuführvorrichtung 44 nicht angetrieben; das Hüllmittel 40 bleibt somit in der bisherigen Lage. Sobald der Pressbetrieb beendet ist, wird die Scherleiste 70 von der Betätigungsvorrichtung 66 zurück gezogen und dabei die Spannrolle 60 auf das Zugmittel 58 gedrückt, so dass die Rolle 54 in Drehung versetzt wird. Die Rolle 54 zieht dann das Hüllmittel 40 von der Hüllmittelrolle 52 ab, so dass es unmittelbar senkrecht von der Rolle 54 abfallend durch die Hüllmitteleinlassöffnung 32 in den Pressraum 20 gelangt. Sobald der Hüllvorgang abgeschlossen ist, drückt die Betätigungsvorrichtung 66 die Scherleiste 70 auf den Amboss 62 und hält somit das Hüllmittel 40 entlang der Kante 68 fest, so dass es aufgrund der weiterhin von dem sich drehenden Ballen 112 ausgeübten Zugkraft zum Abriss kommt. In diesem Zustand ist die Drehung der Rolle 54 unterbrochen, weil die Spannrolle 60 abgehoben wurde. Das verbleibende Hüllmittel 40 nimmt somit wieder seine vorherigen Lage ein.

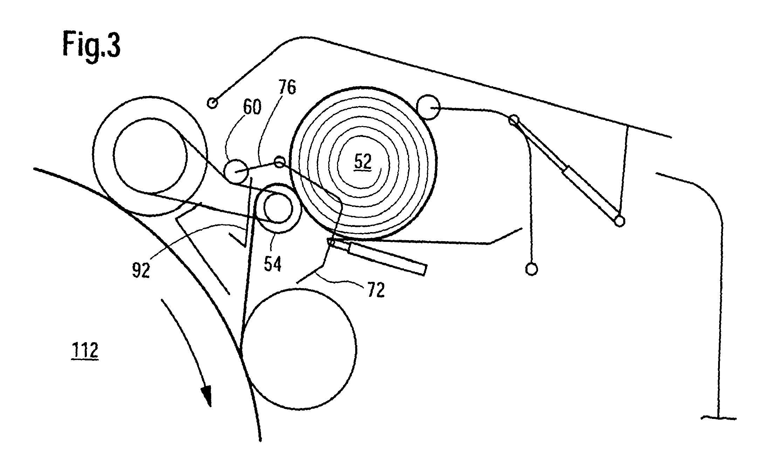

Das Ausführungsbeispiel nach Figur 3 unterscheidet sich von dem bisherigen Ausführungsbeispiel dadurch, dass auf der der Hüllmittelrolle 52 gegenüber liegenden Seite der Rolle 54 ein Leitblech 92 vorgesehen ist, das an seiner Unterseite in der Kante 68 ausläuft - was jedoch nicht zwingend ist - und sich mit seinem oberen Endbereich bis geringfügig über die Rolle 54 hinaus erstreckt. Ein weiterer Unterschied zu dem ersten Ausführungsbeispiel besteht darin, dass der Halter 76 für die Spannrolle 60 eine Verlängerung der Arme 72 darstellt, anstatt eines Abzweigs. Die Funktion und der übrige Aufbau der Hüllvorrichtung 26 sind mit dem vorherigen Ausführungsbeispiel identisch.

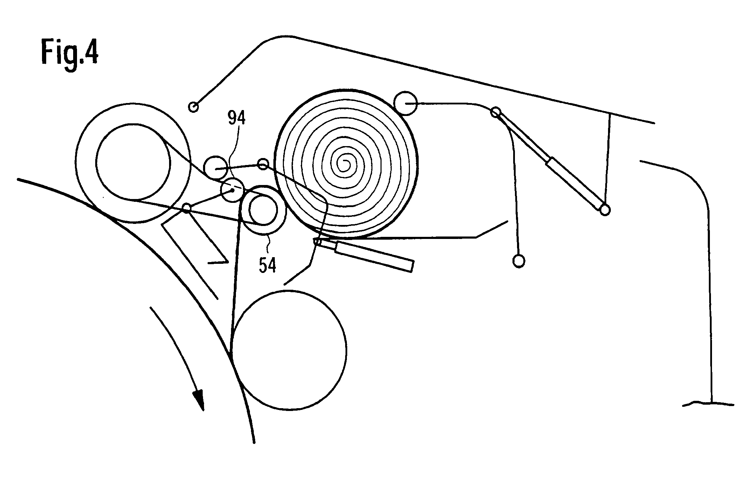

Das dritte Ausführungsbeispiel gemäß Figur 4 entspricht im Wesentlichen dem aus Figur 3, wobei allerdings das Leitblech 92 durch eine Leitrolle 94 ersetzt ist, die antriebslos mit geringem Abstand und parallel zu der Rolle 54 vorgesehen ist und somit das Hüllmittel 40 in Anlage an der Rolle 54 hält.

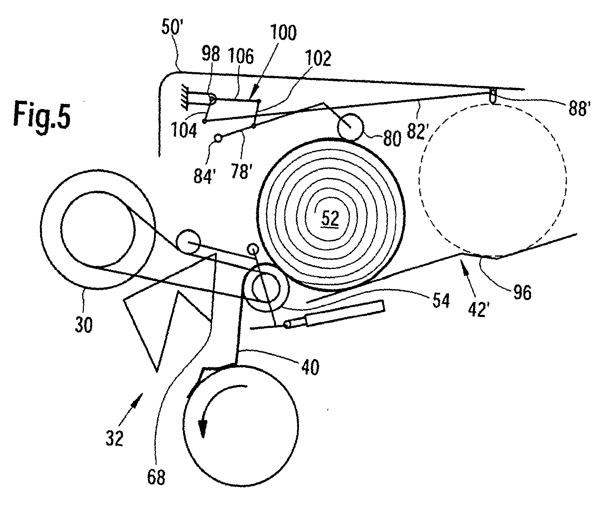

Das vierte Ausführungsbeispiel nach Figur 5 weist Unterschiede bezüglich des Trägers 42 und der Andrückvorrichtung 48 auf. Der Träger 42' ist mit einer Stufe 96 versehen und so lange ausgebildet, dass zwei Hüllmittelrollen 52 auf ihm abgelegt werden können und zwar eine zu jeder Seite der Stufe 96. Der Träger 42' weist zu der Hüllmitteleinlassöffnung 32 hin ein geringes Gefälle auf, und die Stufe 96 dient als Anschlag für die zweite Hüllmittelrolle 52, die als Vorrat vorgesehen ist. Die Andrückvorrichtung 48' beruht auf demselben Prinzip wie die der vorherigen Ausführungsbeispiele, d. h. mittels eines an der Abdeckung 50 abgestützten Kraftglieds 82' wird eine an einem Schwenkteil 78' angebrachte Druckrolle 80 auf die Hüllmittelrolle 52 gedrückt; sie ist aber derart an der Innenseite der Abdeckung 50 angebracht, dass bei angehobener Abdeckung 50 alle beteiligten Teile mit angehoben werden und die Hüllmittelrolle(n) 52 nicht nur von der Seite, sondern auch von vorne geladen werden können. Der Schwenkteil 78' ist wiederum um ein Lager 84' an dem Fahrgestell 12 oder den Seitenwänden 28 vertikal schwenkbar gelagert, wobei sich das Lager 84' in dem Bereich zwischen der Hüllmittelrolle 52 und der über der Hüllmitteleinlassöffnung 32 gelegenen Pressrolle 30 befindet. Die am freien Ende des Schwenkteils 78' angebrachte Druckrolle 80 oder Druckstange drückt in der gleichen Stellung wie bisher auf die Hüllmittelrolle 52. Das Kraftglied 82' ist einenends mit dem Arm 88' an der Innenseite der Abdeckung 50 befestigt, und zwar im Bereich der zweiten Hüllmittelrolle 52. Abweichend von den bisherigen Ausführungsbeispielen ist ein Lager 98, ein Umlenkhebel 100 und ein Lenker 102 vorgesehen. Das Lager 98 mit einer im Wesentlichen horizontalen Schwenkachse ist in den Seitenwänden 28 bzw. dem Fahrgestell 12 befestigt und befindet sich oberhalb des Lagers 84' innerhalb des von der Abdeckung 50' umschlossenen Raums. Der Umlenkhebel 100 ist zweiarmig ausgebildet und von dem Lager 98 aufgenommen, so dass er in vertikaler Richtung schwenken kann. Es können ein oder mehrere Umlenkhebel 100 vorgesehen werden. An einem freien Ende eines Schenkels 104, der sich in der geschlossenen Stellung der Abdeckung 50 und bei dem Ausführungsbeispiel nach Figur 5 im Wesentlichen aufrecht erstreckt, ist der andere noch freie Endbereich des Kraftglieds 82' gelenkig angebracht. Der in dem Lager 98 aufgenommene Endbereich des Schenkels 104 ist mit einem Schenkel 106 starr und unter einem Winkel von ca. 90 Grad verbunden, der an seinem freien Endbereich den Lenker 102 gelenkig aufnimmt. Der Lenker 102, der eine starre Stange oder dergleichen in zwei Richtung Kraft übertragendes Bauteil sein kann, ist mit seinem anderen Endbereich an den Schwenkteil 78 schwenkbar angeschlossen und verläuft in der in Figur 5 dargestellten Lage nahezu parallel zu dem Schenkel 104. Der Aufbau dieser Andrückvorrichtung 48' hat zum Ergebnis, dass das Kraftglied 82' und der Schwenkteil 78' stets in der gleichen Richtung schwenken, so dass die Hüllmittelrolle 52 freigegeben wird, wenn die Abdeckung 50 geöffnet bzw. angehoben wird. Schließlich befindet sich in diesem Ausführungsbeispiel die Rolle 54 nicht mehr innerhalb des von den Außenseiten der Pressrollen 30 beschriebenen Kreises, sondern nur noch an diesen angrenzend. Allerdings ist der Abstand derart gewählt, dass das von der Rolle 54 abgegebene Hüllmittel 40 auf die unterhalb der Hüllmitteleinlassöffnung 32 gelegene Pressrolle 30 fällt und von dieser in den Pressraum 20 mitgenommen wird. Auf diese Weise bedarf es nach wie vor keiner zusätzlichen Förderelemente, um das Hüllmittel 40 in den Pressraum 20 zu bringen.

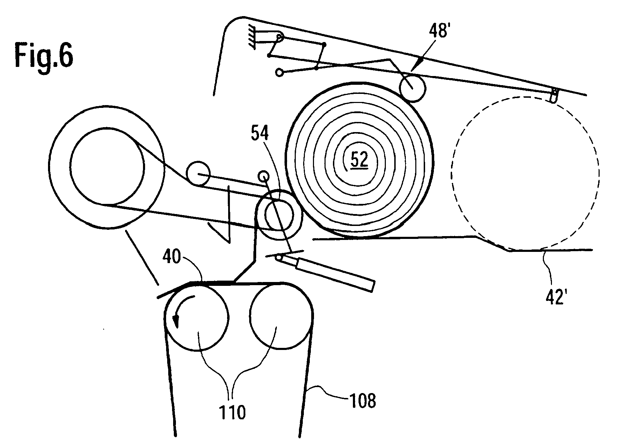

Das Ausführungsbeispiel nach Figur 6 entspricht im Wesentlichen dem nach Figur 5, insbesondere was den Träger 42' und die Andrückvorrichtung 48' betrifft. Allerdings verläuft der Träger 42' nicht mehr geneigt sondern waagrecht. Der eigentliche Unterschied liegt darin, dass das unterhalb der Hüllmitteleinlassöffnung 32 befindliche Pressmittel 18 nicht als Pressrolle, sondern als Zugmittel 108 ausgebildet ist, z. B. als Riemen, Kette, Band oder dergleichen, das über zwei Umlenkrollen 110 verläuft. Auch in diesem Fall fällt das Hüllmittel 40 stromabwärts der Rolle 54 auf das Pressmittel 18 und wird von diesem in den Pressraum 20 gefördert. Wie in allen vorherigen Ausführungsbeispielen liegt die Hüllmittelrolle 52 an der Rolle 54 an, auf der das Hüllmittel 40 aufliegt und mitgenommen und nach unten abgegeben wird.

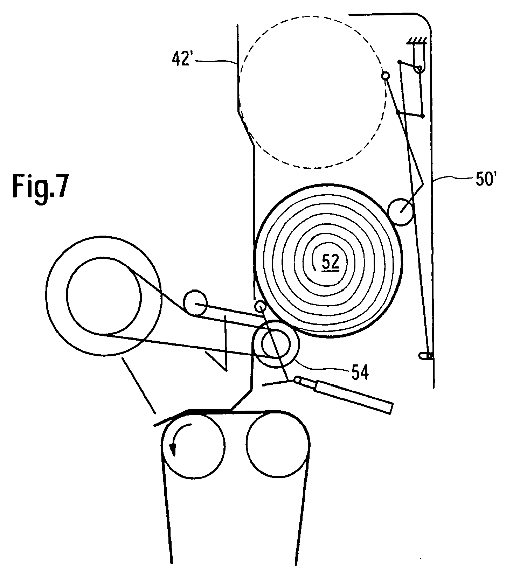

Das Ausführungsbeispiel nach Figur 7 entspricht im Wesentlichen dem aus Figur 6, wobei allerdings der Träger 42', die Andrückvorrichtung 48' und die Abdeckung 50 vertikal ausgerichtet sind und die Hüllmittelrolle 52 nunmehr auf der Rolle 54 aufsitzt.

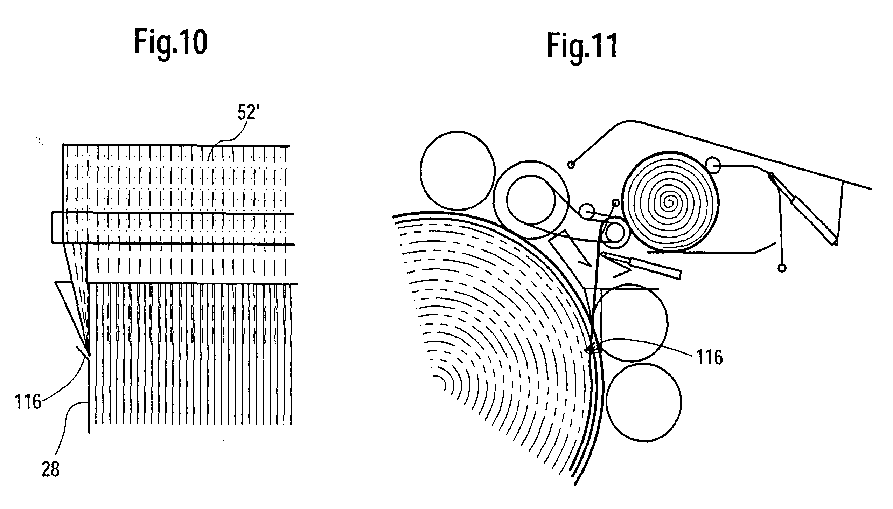

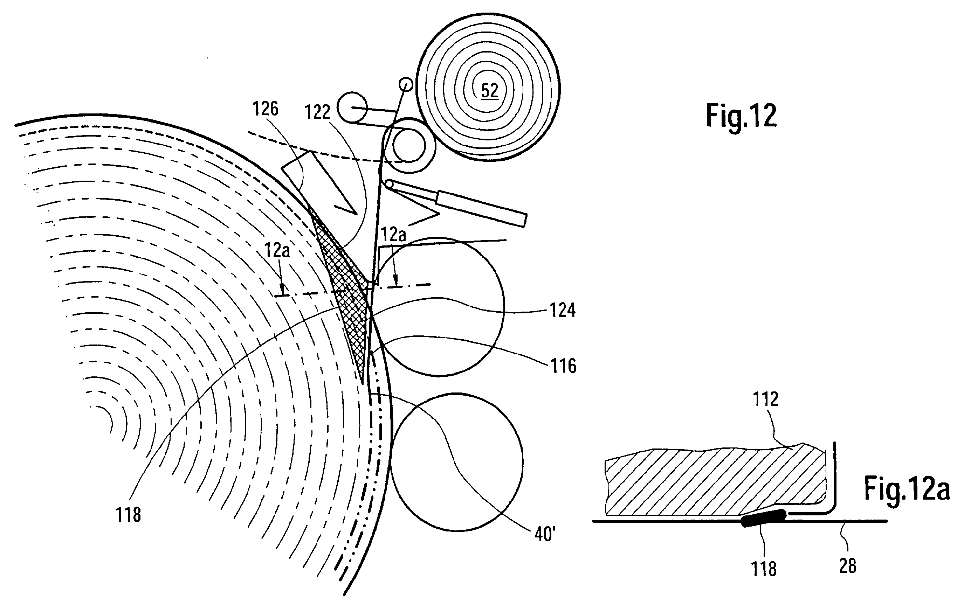

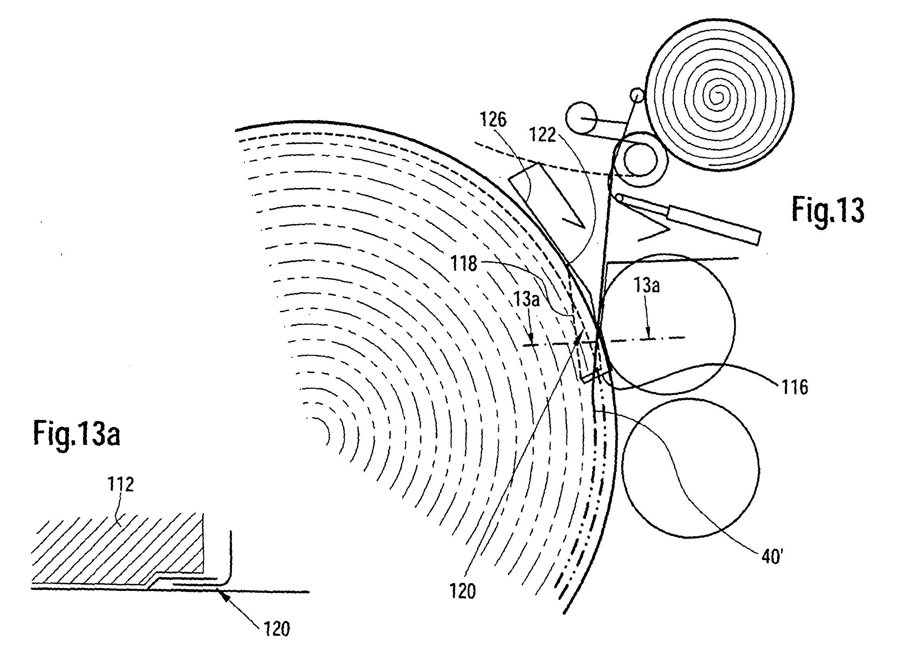

In den Ausführungsbeispielen nach den Figuren 8 bis 13 wird im Wesentlichen von dem Ausführungsbeispiel nach den Figuren 1 und 2 ausgegangen, wobei allerdings ein Hüllmittel 40' mit der dazugehörigen Hüllmittelrolle 52' gewählt wurden, die breiter sind als der Pressraum 20 bzw. der in ihm hergestellter Ballen 112. Der Vorteil eines derartigen überbreiten Hüllmittels 40' besteht darin, dass auch die Ecken und ein geringer Teil der Stirnseiten des Ballens 112 bedeckt, was die Witterungseinflüsse verringert, beim Umwickeln mit Folie zu Silagezwecken geringere Lufteinschlüsse verursacht und diese Folie weniger mechanisch beansprucht. Um das Hüllmittel 40' an die Stirnseiten des Ballens 112 zu leiten, sind gemäß den Figuren 8 und 9 Leitbleche 114, gemäß den Figuren 10 und 11 Schlitze 116, gemäß Figuren 12 ein Ablenkteil 118 und gemäß Figur 13 ein Einlasskanal 120 jeweils an bzw. in den Seitenwänden 28 vorgesehen über die, bzw. durch die hindurch die Seitenbereiche des Hüllmittels 40' in den Pressraum 20 gelangen und das Hüllmittel 40' auf eine geringere Breite zusammengeführt wird.

Bei den Leitblechen 114 handelt es sich um von den Seitenwänden 28 nach außen abgewinkelte Flächen, z.B. aus Blech, die von der breitesten Erstreckung des Hüllmittels 40' ausgehend bis zu den Seitenwänden 28 unter einem Winkel von bis zu ca. 15 bis 45 Grad verlaufen. Die Leitbleche 114 beginnen stromabwärts der Hüllmitteleinlassöffnung 32 und erstrecken sich weiter stromabwärts bis ungefähr über die der Hüllmitteleinlassöffnung 32 stromabwärts folgende Pressrolle 30.

Die Schlitze 116 werden von kleinen ungefähr radial zu der Mitte des Pressraums 20 verlaufenden Einschnitten in den Seitenwänden 28 gebildet, wobei der stromabwärts auf den jeweiligen Schlitz 116 folgende Randbereich der Seitenwand 28 nach außen gebogen ist, um eine scharfe Kante zu vermeiden, an der das Hüllmittel 40' beschädigt werden könnte.

Der Ablenkteil 118 ist als eine Platte ausgebildet, die an der Innenseite jeder Seitenwand 28 stromaufwärts der Eintrittsstelle des Hüllmittels 40' angebracht ist und eine Dicke aufweist, die geringfügig über der des Hüllmittels 40' liegt. Die Dicke des Ablenkteils 118 kann stetig ansteigend ausgebildet sein. Der Ablenkteil 118 ist in dem dargestellten Ausführungsbeispiel als gleichschenkliges Dreieck ausgebildet, dessen einer Schenkel 122 an den Amboss 62 anschließt, während sich ein anderer Schenkel 124 entlang der Zuführlinie des Hüllmittels 40' erstreckt. Der andere Schenkel 124 erstreckt sich von der Umfangslinie des Ballens 112 ausgehend wenigstens soweit entlang der Stirnseite des Ballens 112, wie das Hüllmittel 40' die Stirnseite bedecken soll. Der Ablenkteil 118 drückt somit den Ballen 112 im Einlaufbereich des Hüllmittels 40' von der Innenseite der Seitenwände 28 weg und bildet einen Freiraum oder Schatten, in den der über die Breite des Ballens 112 überstehende Teil des Hüllmittels 40' eintreten und sich auf die Stirnseite des Ballens 112 legen kann, wie dies in Figur 12a zu sehen ist. In diesem Fall bedarf es folglich keiner Öffnung in der Seitenwand 28, um den überstehenden Abschnitt des Hüllmittels 40' in den Pressraum 20 zu bringen.

Die Ausführungsform nach Figur 13 weist ebenfalls einen Ablenkteil 118' auf, der allerdings nicht flächig an der Innenseite der Seitenwand 28 anliegt, sondern zu dieser einen geringen Abstand hält, der den Einlasskanal 120 bildet. Der Ablenkteil 118' kann im Wesentlichen die gleiche Form aufweisen und an derselben Stelle wie der Ablenkteil 118 angebracht sein; allerdings wird der über den Pressraum 20 überstehende Randbereich des Hüllmittels 40' wiederum durch einen im Wesentlichen radialen Schlitz 116 in den Seitenwänden 28 auf die Stirnseiten des Ballens 112 geleitet.

## Patentansprüche

1. Rundballenpresse (10) mit einem Pressraum (20), wenigstens einem den Pressraum (20) umfangsseitig umgebenden Pressmittel (18), einer Hüllvorrichtung (26) und einer Hüllmitteleinlassöffnung (32) in der Umfassung des Pressraums (20) durch das Pressmittel (18) oberhalb des Bodens des Pressraums (20), **gekennzeichnet durch** eine antreibbare Rolle (54) an der Hüllmitteleinlassöffnung (32), an der eine mit Hüllmittel (40, 40') bewickelte Hüllmittelrolle (52, 52') reibschlüssig zur Anlage bringbar ist.

2. Rundballenpresse nach Anspruch 1, **dadurch gekennzeichnet, dass** die Rolle (54) Teil des Pressmittels (18) ist, das Hüllmittel (40) auf einem verstellbaren Träger (42, 42') aufliegt und in seiner Bewegung gebremst wird.

3. Rundballenpresse nach Anspruch 1, **dadurch gekennzeichnet, dass** die Rolle (54) von dem Pressmittel (18) getrennt ausgebildet und vorzugsweise über das Pressmittel (18) antreibbar ist.

4. Rundballenpresse nach einem oder mehreren der vorherigen Ansprüche, **dadurch gekennzeichnet, dass** die Hüllmittelrolle (52, 52') während des Hüllvorgangs an dem Träger (42, 42') oder einer sonstigen Wandung reibend zur Anlage bringbar ist.

5. Rundballenpresse nach einem oder mehreren der vorherigen Ansprüche, **dadurch gekennzeichnet, dass** der Rolle (54) ein Leitblech (92) zugeordnet ist, das der Führung des Hüllmittels (40, 40') in bzw. durch die Hüllmitteleinlassöffnung (32) dient.

6. Rundballenpresse nach einem oder mehreren der vorherigen Ansprüche, **dadurch gekennzeichnet, dass** zwischen der Rolle (54) und der Hüllmitteleinlassöffnung (32) eine Trennvorrichtung (46) für das Hüllmittel (40, 40') vorgesehen ist.

7. Rundballenpresse nach einem oder mehreren der vorherigen Ansprüche, **dadurch gekennzeichnet, dass** eine unter Kraftbeaufschlagung stehende Druckrolle (80) vorgesehen ist, die im Wesentlichen diametral gegenüber der Rolle (54) an der Hüllmittelrolle (52, 52') angreift.

8. Rundballenpresse nach einem oder mehreren der vorherigen Ansprüche, **dadurch gekennzeichnet, dass** das Hüllmittel (40, 40') mit der Rolle (54) im Wesentlichen über 180 Bogengrade in Eingriff ist.

9. Rundballenpresse nach einem oder mehreren der vorherigen Ansprüche, **dadurch gekennzeichnet, dass** die Hüllvorrichtung (26) unter einer beweglichen Abdeckung (50, 50') vorgesehen ist und die Druckrolle (80) an der Abdeckung (50, 50') verstellbar angelenkt ist.

10. Rundballenpresse nach einem oder mehreren der vorherigen Ansprüche, **gekennzeichnet durch** eine Andrückvorrichtung (48) für die Druckrolle (80), die ein unter Kraftbeaufschlagung stehendes Kraftglied (82) und einen Schwenkteil (78) aufweist, wobei sich das Kraftglied (82) einerseits an der Abdeckung (50, 50') und andererseits mittelbar oder unmittelbar an dem Schwenkteil (78) und der darauf befindlichen Druckrolle (80) abstützt.

11. Rundballenpresse nach einem oder mehreren der vorherigen Ansprüche, **dadurch gekennzeichnet, dass** das Kraftglied 82 zwischen einer die Abdeckung (50, 50') öffnenden und einer die Abdeckung (50, 50') schließenden Stellung verstellbar ist und dabei eine Totpunktlage durchschreitet.

12. Rundballenpresse nach einem oder mehreren der vorherigen Ansprüche, **dadurch gekennzeichnet, dass** die Hüllvorrichtung (26) breiter ausgebildet ist als der Pressraum (20) und stromabwärts der Rolle (54) Leitbleche (114) oder Schlitze (116) vorgesehen sind, um das Hüllmittel (40') zu den Stirnseiten eines in dem Pressraum (20) gebildeten Ballens (112) zu leiten.

13. Rundballenpresse nach einem oder mehreren der vorherigen Ansprüche, **dadurch gekennzeichnet, dass** die Hüllvorrichtung (26) breiter ausgebildet ist als der Pressraum (20) und stromaufwärts einer Eintrittsstelle des Hüllmittels (40') in den Pressraum (20) auf Innenseite der Seitenwand (28) des Pressraums (20) ein Ablenkteil (118, 118') vorgesehen ist.

14. Rundballenpresse nach Anspruch (13), **dadurch gekennzeichnet, dass** der Ablenkteil (118') zu der Seitenwand (28) beabstandet ist und zu dieser einen Einlasskanal (120) für einen Teil des Hüllmittels (40') bildet.

## Claims

1. Roundbaler (10) with a baling chamber (20), at least one baling means (18) circumferentially surrounding the baling chamber (20), a wrapping device (26) and a wrapping-means inlet opening (32) in the enclosure of the baling chamber (20) by the baling means (18) above the floor of the baling chamber (20), **characterized by** a drivable roller (54) at the wrapping-means inlet opening (32), with which roller a roll (52, 52') of wrapping means wound with wrapping means (40, 40') can be brought into contact in a frictionally engaged manner.

2. Roundbaler according to Claim 1, **characterized in that** the roller (54) is part of the baling means (18), and the wrapping means (40) rests on an adjustable support (42, 42') and the movement of said wrapping means is braked.

3. Roundbaler according to Claim 1, **characterized in that** the roller (54) is formed separately from the baling means (18) and can preferably be driven via the baling means (18).

4. Roundbaler according to one or more of the preceding claims, **characterized in that** the roll (52, 52') of wrapping means can be brought frictionally into contact with the support (42, 42') or another wall during the wrapping operation.

5. Roundbaler according to one or more of the preceding claims, **characterized in that** the roller (54) is assigned a guide plate (92) which serves to guide the wrapping means (40, 40') into and through the wrapping-means inlet opening (32).

6. Roundbaler according to one or more of the preceding claims, **characterized in that** a cutting device (46) for the wrapping means (40, 40') is provided between the roller (54) and the wrapping-means inlet opening (32).

7. Roundbaler according to one or more of the preceding claims, **characterized in that** a pressure roller (80) which is subjected to the action of a force is provided, said pressure roller acting on the roll (52, 52') of wrapping means substantially diametrically opposite the roller (54).

8. Roundbaler according to one or more of the preceding claims, **characterized in that** the wrapping means (40, 40') is in engagement with the roller (54) essentially over 180 degrees of arc.

9. Roundbaler according to one or more of the preceding claims, **characterized in that** the wrapping device (26) is provided under a movable covering (50, 50'), and the pressure roller (80) is coupled adjustably to the covering (50, 50').

10. Roundbaler according to one or more of the preceding claims, **characterized by** a pressing-on device (48) for the pressure roller (80), said pressing-on device having a force-exerting element (82), which is subjected to the action of a force, and a pivoting part (78), the force-exerting element (82) being supported on one side on the covering (50, 50') and being supported on the other side indirectly or directly on the pivoting part (78) and the pressure roller (80) which is located thereon.

11. Roundbaler according to one or more of the preceding claims, **characterized in that** the force-exerting element (82) can be adjusted between a position opening the covering (50, 50') and a position closing the covering (50, 50') and, in the process, passes through a dead centre position.

12. Roundbaler according to one or more of the preceding claims, **characterized in that** the wrapping device (26) is of wider design than the baling chamber (20), and guide plates (114) or slots (116) are provided downstream of the roller (54) in order to conduct the wrapping means (40') to the end sides of a bale (112) formed in the baling chamber (20).

13. Roundbaler according to one or more of the preceding claims, **characterized in that** the wrapping device (26) is of wider design than the baling chamber (20), and a deflecting part (118, 118') is provided on an inner side of the side wall (28) of the baling chamber (20) upstream of an entry point of the wrapping means (40') into the baling chamber (20).

14. Roundbaler according to Claim 13, **characterized in that** the deflecting part (118') is spaced apart from the side wall (28) and forms an inlet channel (120) with respect to the latter for a part of the wrapping means (40').

## Revendications

1. Presse à balles rondes (10) comprenant un espace de pressage (20), au moins un moyen de pressage (18) entourant la circonférence de l'espace de pressage (20), un dispositif d'enveloppement (26) et une ouverture d'entrée du moyen d'enveloppement (32) dans l'enceinte de l'espace de pressage (20) défini par le moyen de pressage (18) au-dessus du fond de l'espace de pressage (20), **caractérisée par** un rouleau (54) pouvant être entraîné près de l'ouverture d'entrée du moyen d'enveloppement (32), auquel un rouleau de moyen d'enveloppement (52, 52') enroulé avec un moyen d'enveloppement (40, 40') peut être amené en appui par engagement par friction.

2. Presse à balles rondes selon la revendication 1, **caractérisée en ce que** le rouleau (54) fait partie du moyen de pressage (18), le moyen d'enveloppement (40) repose sur un support réglable (42, 42') et son mouvement est freiné.

3. Presse à balles rondes selon la revendication 1, **caractérisée en ce que** le rouleau (54) est réalisé séparément du moyen de pressage (18) et peut de préférence être entraîné par le biais du moyen de pressage (18).

4. Presse à balles rondes selon l'une quelconque ou plusieurs des revendications précédentes, **caractérisée en ce que** le rouleau de moyen d'enveloppement (52, 52') peut être engagé par friction pendant l'opération d'enveloppement contre le support (42, 42') ou une autre paroi.

5. Presse à balles rondes selon l'une quelconque ou plusieurs des revendications précédentes, **caractérisée en ce que** le rouleau (54) est associé à une tôle directrice (92) qui sert au guidage du moyen d'enveloppement (40, 40') dans ou à travers l'ouverture d'entrée du moyen d'enveloppement (32).

6. Presse à balles rondes selon l'une quelconque ou plusieurs des revendications précédentes, **caractérisée en ce qu'**il est prévu entre le rouleau (54) et l'ouverture d'entrée du moyen d'enveloppement (32) un dispositif de séparation (46) pour le moyen d'enveloppement (40, 40').

7. Presse à balles rondes selon l'une quelconque ou plusieurs des revendications précédentes, **caractérisée en ce qu'**il est prévu un rouleau de pression (80) sollicité par une force, qui vient en prise essentiellement dans une position diamétralement opposée au rouleau (54) sur le rouleau de moyen d'enveloppement (52, 52').

8. Presse à balles rondes selon l'une quelconque ou plusieurs des revendications précédentes, **caractérisée en ce que** le moyen d'enveloppement (40, 40') est en prise avec le rouleau (54) essentiellement sur un arc de 180 degrés.

9. Presse à balles rondes selon l'une quelconque ou plusieurs des revendications précédentes, **caractérisée en ce que** le dispositif d'enveloppement (26) est prévu sous un recouvrement mobile (50, 50') et le rouleau de pression (80) est articulé de manière réglable au recouvrement (50, 50').

10. Presse à balles rondes selon l'une quelconque ou plusieurs des revendications précédentes, **caractérisée par** un dispositif d'application de pression (48) pour le rouleau de pression (80), qui présente un organe de force (82) sollicité par une force et une partie pivotante (78), l'organe de force (82) s'appuyant d'une part contre le recouvrement (50, 50') et d'autre part de manière directe ou indirecte contre la partie pivotante (78) et le rouleau de pression (80) disposé dessus.

11. Presse à balles rondes selon l'une quelconque ou plusieurs des revendications précédentes, **caractérisée en ce que** l'organe de force (82) peut être réglé entre une position ouvrant le recouvrement (50, 50') et une position fermant le recouvrement (50, 50') et passe dans ce cas par une position de point mort.

12. Presse à balles rondes selon l'une quelconque ou plusieurs des revendications précédentes, **caractérisée en ce que** le dispositif d'enveloppement (26) est formé plus large que l'espace de pressage (20) et **en ce que** des tôles directrices (114) ou des fentes (116) sont prévues en aval du rouleau (54), pour guider le moyen d'enveloppement (40') vers les côtés frontaux d'une balle (112) formée dans l'espace de pressage (20).

13. Presse à balles rondes selon l'une quelconque ou plusieurs des revendications précédentes, **caractérisée en ce que** le dispositif d'enveloppement (26) est formé plus large que l'espace de pressage (20) et **en ce qu'**une partie de déviation (118, 118') est prévue en amont d'un point d'entrée du moyen d'enveloppement (40') dans l'espace de pressage (20) du côté intérieur de la paroi latérale (28) de l'espace de pressage (20).

14. Presse à balles rondes selon la revendication 13, **caractérisée en ce que** la partie de déviation (118') est espacée de la paroi latérale (28) et forme par rapport à celle-ci un canal d'admission (120) pour une partie du moyen d'enveloppement (40').
